# EUROPÄISCHE PATENTSCHRIFT

(11) **EP 2 628 422 B1**
(45) Veröffentlichungstag und Bekanntmachung des Hinweises auf die Patenterteilung: **01.07.2015**
(21) Anmeldenummer: 13153820.9
(22) Anmeldetag: 04.02.2013
(51) Int. Cl.: A47J 31/44

(54) **Vertikal verstellbarer Getränkeauslaufkopf mit horizontal verstellbaren Auslaufdüsen**
Vertically adjustable beverage discharge head with horizontally adjustable outlet nozzles
Tête de sortie de boisson réglable verticalement avec buses de sortie réglables horizontalement

(30) Priorität: 14.02.2012 DE 102012202182
(43) Veröffentlichungstag der Anmeldung: 21.08.2013
(73) Patentinhaber: BSH Hausgeräte GmbH, 81739 München (DE)
(72) Erfinder: Knauer, Joachim, 80807 München (DE); Tracy, Timothy Mark, 83352 Altenmarkt (DE); van den Woldenberg, Anja, 89518 Heidenheim (DE)

(56) Entgegenhaltungen:
- EP-A1- 1 512 354
- DE-B3-102006 043 903

## Beschreibung

Die Erfindung betrifft einen zumindest zwischen einer abgesenkten Position und einer angehobenen Position vertikal verstellbaren Getränkeauslaufkopf mit zwei Auslaufdüsen, die am Getränkeauslaufkopf nebeneinander und zum Verändern ihres gegenseitigen Abstands mittels einer Betätigungseinrichtung horizontal bewegbar angeordnet sind. Die Erfindung betrifft außerdem eine Heißgetränkemaschine für Haushaltszwecke mit einem derartigen Getränkeauslaufkopf.

Insbesondere an Kaffeevollautomaten sind höhenverstellbare Getränkeauslaufköpfe bekannt, um das spritzfreie Befüllen von Espressotassen einerseits und von Kaffeebechern oder Kaffeekännchen andererseits zu ermöglichen. Die DE 34 25 943 C1 beschreibt einen Getränkeauslauf zu diesem Zweck für einen Getränkespender, der universell für verschiedene Gefäße und verschiedene Durchflussmengen geeignet sein soll. Dazu sind Auslauföffnungen des Getränkeauslaufs derart angeordnet, dass ihr Abstand zueinander veränderbar ist. In einem bevorzugten Ausführungsbeispiel sind die Auslauföffnungen an jeweils einem Ende zweier Röhrchen angeordnet, deren andere Enden flexibel mit der Getränkezuführleitung verbunden sind. Beide Röhrchen sind durch eine zwischen ihnen angeordnete Spiralfeder belastet, die bestrebt ist, die Auslassöffnungen der Röhrchen voneinander wegzuspreizen. Bei einer Betätigungseinrichtung sind Steuerflächen vorgesehen, mit denen die Röhrchen entgegen der Wirkungen der Feder in eine Parallelstellung zurückgedrängt werden können, so dass die beiden Auslauföffnungen nahe beieinander liegen. Die Betätigung der Steuerflächen kann mit der Getränkevorwahl an einem Getränkeautomaten gekoppelt werden, so dass Bedienungsfehler ausgeschlossen sind. Schließlich können die Auslauföffnungen auch in der Höhe verstellbar und mit einem Antrieb für die Höhenverstellung gekoppelt sein, so dass die Auslauföffnungen nach oben gefahren und in eine Parallelstellung gebracht oder heruntergefahren und auseinandergespreizt oder in der Parallelstellung belassen werden können.

Die EP 1 512 354 A1 offenbart eine Getränkebereitungsmaschine mit einem höhenverstellbaren Getränkeauslauf, wobei der Getränkeauslauf zwei in einem Abstand parallel nebeneinanderliegende und vertikal angeordnete Auslaufrohre mit Auslaufenden aufweist, und eine horizontale Distanz zwischen den Auslaufenden der Auslaufrohre einstellbar ist. Die Auslaufrohre sind in ihrem Abstand A verstellbar und die Auslaufenden der Auslaufrohre in jedem Abstand A vertikal ausgerichtet.

Die DE 10 2006 043903 B3 ist eine Brühgetränkemaschine zur Zubereitung von Tassenportionen mit einem Auslass für das Brühgetränk und einem Auslass für Heissdampf und/oder Milchschaum, die beide vertikal auf eine Tassenabstellfläche gerichtet sind und wobei einer der Auslässe bewegbar ist, sodass die Auslässe vertikal in dieselbe Tasse gerichtet sind, und zwar indem der Brühgetränkeauslass relativ zum Dampf- bzw. Milchschaumauslass horizontal bewegbar ist.

Aufgabe der Erfindung ist es demgegenüber, einen Auslaufkopf mit verstellbaren Auslaufdüsen anzugeben, der einfach aufgebaut ist und dessen Funktion für den Benutzer einfach nachzuvollziehen ist.

Diese Aufgabe wird bei dem eingangs genannten Getränkeauslaufkopf erfindungsgemäß durch eine Kopplung der Betätigungseinrichtung der Auslaufdüsen mit dem vertikal verstellbaren Getränkeauslaufkopf gelöst, so dass eine abgesenkte Position des Getränkeauslaufkopfs mit einem ersten Abstand der Auslaufdüsen und eine angehobene Position des Getränkeauslaufkopfs mit einem zweiten Abstand der Ablaufdüsen korrespondiert, wobei der erste Abstand von dem zweiten Abstand verschieden ist. Bei der angehobenen und der abgesenkten Position handelt es sich regelmäßig um die zwei Endstellungen des Getränkeauslaufkopfs auf seinem Verstellweg. Die Kopplung zwischen der Betätigungseinrichtung der Auslaufdüsen einerseits und dem Getränkeauslaufkopf bzw. seinem Verstellmechanismus andererseits ordnet also zumindest jeder Endstellung des Getränkeauslaufkopfs auf seinem vertikalen Verschiebeweg genau einen einzigen Abstand der Auslaufdüsen zu, so dass eineindeutiger Bezug zwischen der Position des Getränkeauslaufkopfs einerseits und dem Abstand der Auslaufdüsen andererseits besteht. Die Erfindung wendet sich also davon ab, bei einer Kombination eines höhenverstellbaren Auslaufkopfs und Auslaufdüsen, deren Abstand zueinander ebenfalls verstellbar ist, alle denkbaren Kombinationen zuzulassen. Denn sie fordern entweder ein vertieftes Verständnis des Benutzers für die Bedienung der Heißgetränkemaschine oder eine aufwändige Steuerung. Die Erfindung verfolgt vielmehr das Prinzip, zumindest jeder der beiden Endstellungen des Getränkeauslaufkopfs genau einen Abstand der Auslaufdüsen zuzuordnen. Die nachvollziehbare und jederzeit reproduzierbare Zuordnung zwischen der Stellung des Getränkeauslaufkopfs und dem Abstand der Auslaufdüsen fördert die Verständlichkeit und erleichtert damit die Bedienbarkeit der Heißgetränkemaschine.

Oftmals kann ein Getränkeauslaufkopf gemäß Stand der Technik nicht nur zwischen seinen zwei Endstellungen, also der angehobenen und der abgesenkten Position verschoben und in den Endstellungen betätigt, sondern stufenlos zwischen ihnen verfahren und auch in jeder Zwischenstellung betätigt werden. Die Koppelung zur Betätigungseinrichtung kann dann derart gestaltet sein, dass ein unterschiedlicher Abstand der Auslaufdüsen nur in den Endstellungen eingenommen wird, in den Zwischenstellungen des Getränkeauslaufkopfs also entweder der eine oder der andere einer Endstellung zugeordnete Abstand eingestellt wird. Ein Wechsel zwischen den beiden Abständen kann sprunghaft und beliebig etwa jeweils vor Erreichen der einen oder der andern Endstellung oder z. B. auch in der geometrischen Mittelstellung des Getränkeauslaufkopfs erfolgen. Nach einer vorteilhaften Ausgestaltung der Erfindung kann der Getränkeauslaufkopf zwischen der abgesenkten Position und der angehobenen Position stufenlos verstellbar und der Abstand der Auslaufdüsen zueinander ebenfalls stufenlos variierbar sein. Die eineindeutige Zuordnung der vertikalen Position des Getränkeauslaufkopfs einerseits und des horizontalen Abstands der Auslaufdüsen andererseits muss sich folglich nicht nur auf die Endstellung des Getränkeauslaufkopfs beziehen, sondern kann auch für jede Zwischenstellung vorgesehen sein. Außerdem muss die Zuordnung nicht zwingend direkt proportional ausgebildet sein, so dass eine Änderung der Höhenposition des Getränkeauslaufkopfs an jeder Position seines Verschiebewegs folglich in immer derselben relativen Abstandsänderung der Auslaufdüsen resultiert. Die Zuordnung kann vielmehr auch mit einem funktionsabhängigen Verhalten ausgebildet sein, so dass die Abstandsänderung der Auslaufdüsen in Abhängigkeit von der Höhenänderung des Getränkeauslaufkopfs beispielsweise quadratisch zunimmt, je mehr sich der Getränkeauslaufkopf seiner oberen Endstellung nähert. Dennoch aber bleibt jeder Höhenposition des Getränkeauslaufkopfs genau ein Abstand der Auslaufdüsen zugeordnet. Damit lässt sich die Bedienung der Heißgetränkemaschine komfortabler gestalten, ohne dass sie sich verkompliziert.

Aus dem Stand der Technik ist die Kopplung einer angehobenen Position des Getränkeauslaufkopfs mit einem geringen Abstand der Auslaufdüsen zum Befüllen eines Kaffeekännchens und die Kombination einer abgesenkten Position des Auslaufkopfs mit einem großen Abstand der Auslaufdüsen bekannt, um zwei Espressotassen möglichst spritzarm zu befüllen. Nach einer vorteilhaften Ausgestaltung der Erfindung jedoch können eine abgesenkte Position des Getränkeauslaufkopfs mit einem geringen Abstand der Auslaufdüsen und die angehobene Position des Getränkeauslaufkopfs mit einem größeren Abstand der Auslaufdüsen korrespondieren. In der erfindungsgemäßen Anordnung lassen sich vorteilhafterweise sowohl zwei große Gläser oder Tassen, beispielsweise für Latte macchiato, unter dem angehobenen Getränkeauslaufkopf genauso gut befüllen wie zwei kleine Tassen, beispielsweise für Espresso, unter dem abgesenkten Auslaufkopf. Denn es ist das Verdienst der Erfindung erkannt zu haben, dass große Getränkegefäße, egal ob Tassen oder Gläser, regelmäßig größere Wandstärken aufweisen und oftmals zusätzlich stark profiliert oder bauchig ausgeführt sind, so dass ihre Ränder, auch wenn die Gefäße an sich unmittelbar in Berührkontakt nebeneinander stehen, weiter auseinander liegen, als dies bei kleineren Gefäßen der Fall ist. Daher wird regelmäßig in der angehobenen Position des Getränkeauslaufkopfs ein größerer statt ein kleinerer Abstand der Auslaufdüsen gewünscht, wohingegen in der abgesenkten Position des Getränkeauslaufkopfs regelmäßig ein geringerer Abstand der Düsen wünschenswert bzw. zumindest nicht störend ist. Schon nach wenigen Betätigungen des erfindungsgemäßen Getränkeauslaufkopfs ist dieser Umstand für den Benutzer leicht nachvollziehbar.

Wie im Stand der Technik bekannt, kann die Verstellung sowohl des Getränkeauslaufkopfs als auch des Abstands der Auslaufdüsen durch separate, beispielsweise elektrisch betriebene Antriebe erfolgen. Nach einer weiteren vorteilhaften Ausgestaltung der Erfindung erfolgt die Kopplung der vertikalen Stellung des Getränkeauslaufkopfs einerseits und des Abstand der Auslaufdüsen andererseits bzw. deren jeweilige Betätigungseinrichtungen über eine Mechanik. Eine mechanische Kopplung bietet sich wegen der eineindeutigen Zuordnung zwischen der Position des Getränkeauslaufkopfs und dem Abstand der Auslaufdüsen an. Sie kann beispielsweise durch formschlüssige Getriebe, wie Zahnrad- oder Zahnriemengetriebe hergestellt werden, oder durch kraftschlüssige Getriebe, wie beispielsweise Riemengetriebe, ausgebildet sein. Sie ermöglichen eine kompakte, leichtgängige und vor allen Dingen auch für eine Vielzahl von Benutzungen ausgelegte dauerhafte Kopplungsmöglichkeit.

Nach einer weiteren vorteilhaften Ausgestaltung der Erfindung kann die horizontale Bewegung der Auslaufdüsen auch untereinander derart gekoppelt sein, dass sie bezüglich einer Mittelsenkrechten, beispielsweise der vertikalen Verstellrichtung des Getränkeauslaufkopfs, symmetrisch und in entgegengesetzter Richtung um die gleiche Weglänge bewegbar sind. In dieser Gestaltung ist die Bewegung der Auslaufdüsen für jeden Benutzer ohne weiteres nachvollziehbar. Sie passt insbesondere auch zum Design vieler Kaffeevollautomaten, deren Front- bzw. Benutzeransicht symmetrisch aufgebaut ist, mit der eine symmetrische Bewegung der Auslaufdüsen gut harmoniert.

Nach einer dazu alternativen Ausgestaltungsform der Erfindung kann der Getränkeauslaufkopf zwar zwei Auslaufdüsen umfassen, von denen aber nur eine bewegbar ist. Im Übrigen aber kann die sinngemäß gleiche Kopplung zwischen der Bewegung des Getränkeauslaufkopfs einerseits und des Abstands zwischen der bewegbaren und der nichtbewegbaren Auslaufdüse andererseits ausgebildet sein. Diese Variante kann sich bei Heißgetränkemaschinen anbieten, bei denen nur begrenzter Bauraum auf der Frontseite bzw. Benutzeransicht zur Verfügung steht, oder deren Frontseite ohnehin bezüglich der Verschiebungsrichtung des Getränkeauslaufkopfs asymmetrisch gestaltet ist.

Der Abstand der Getränkeauslaufdüsen infolge ihrer Bewegbarkeit kann auf unterschiedliche Weise erreicht werden, z. B. wie im Stand der Technik durch Verschwenken der Auslaufdüsen. Nach einer vorteilhaften Ausgestaltung der Erfindung kann die bewegbare Auslaufdüse bzw. können die bewegbaren Auslaufdüsen verschiebbar angeordnet sein. Die Auslaufdüsen können damit unabhängig von ihrem Abstand in jeder Lage parallel abwärts gerichtet sein, so dass auch der aus ihnen austretende Getränkestrahl in einer vorhersehbaren Richtung in ein abgestelltes Getränkegefäß trifft. Auch dadurch lässt sich ein Spritzen bei der Getränkeabgabe erheblich reduzieren.

Nach einer weiteren vorteilhaften Ausgestaltung der Erfindung kann die Heißgetränkemaschine über eine Kulissenführung als Kopplung zwischen dem Getränkeauslaufkopf und den Auslaufdüsen verfügen. Sie stellt eine robuste und mechanisch einfache Kopplung dar, die auch ggf. mit einer mechanischen oder maschinellen Verstellung des Auslaufkopfs kombinierbar ist. Denn sie kann dazu dienen, die vertikale Verstellbewegung des Getränkeauslaufkopfs in eine horizontale Verstellbewegung einer oder beider Auslaufdüsen umzusetzen. Je nach Gestaltung der Kulissen kann eine proportionale Abstandsänderung der Auslaufdüsen in Abhängigkeit von der Höhenverstellung des Getränkeauslaufkopfs erreicht werden oder eine funktionsabhängige Abstandsänderung, wenn die Kulissen z.B. parabelförmig gekrümmt ausgebildet sind.

Nach einer demgemäßen vorteilhaften Ausgestaltung der Erfindung kann zumindest einer der Ausläufe horizontal verschiebbar am Auslaufkopf gelagert und mit einem Kulissenstein mechanisch weitgehend starr gekoppelt sein, der in eine im wesentlichen vertikal geneigt verlaufende Kulisse verschiebbar eingreift. Die Neigung der Kulisse liegt in derselben Ebene oder parallel zu derjenigen Ebene, in der auch die hinsichtlich ihres Abstands verschiebbaren Ausläufe liegen. Eine vertikale Verschiebung des Getränkeauslaufkopfs verursacht folglich durch Verschiebung des Kulissensteins innerhalb der Kulisse dessen horizontale Verschiebung und damit auch eine horizontale Verschiebung der Auslaufdüse in der Lagerung am Auslaufkopf. Sind die Kulissen an der Heißgetränkemaschine für den Benutzer sichtbar angeordnet, so vermitteln sie ihm unmittelbar den Zusammenhang zwischen der Stellung des Getränkeauslaufkopfs und dem Abstand der Auslaufdüsen.

Die eingangs genannte Aufgabe wird außerdem durch eine Heißgetränkemaschine für Haushaltszwecke mit einem vertikal verstellbaren Getränkeauslaufkopf gelöst, der zwei nebeneinander angeordnete Auslaufdüsen aufweist, die zum Verändern ihres gegenseitigen Abstands mittels einer Betätigungseinrichtung horizontal verstellbar ausgebildet sind, und die eine in der oben beschriebenen Weise gestaltete Koppelung zwischen dem Getränkeauslaufkopf und der Betätigungseinrichtung aufweist.

Das Prinzip der Erfindung wird im Folgenden anhand einer Zeichnung beispielshalber noch näher erläutert. In der Zeichnung zeigen:
- Figur 1:: einen erfindungsgemäßen Getränkeauslaufkopf in einer angehobenen Position,
- Figur 2:: den Getränkeauslaufkopf in einer abgesenkten Position.

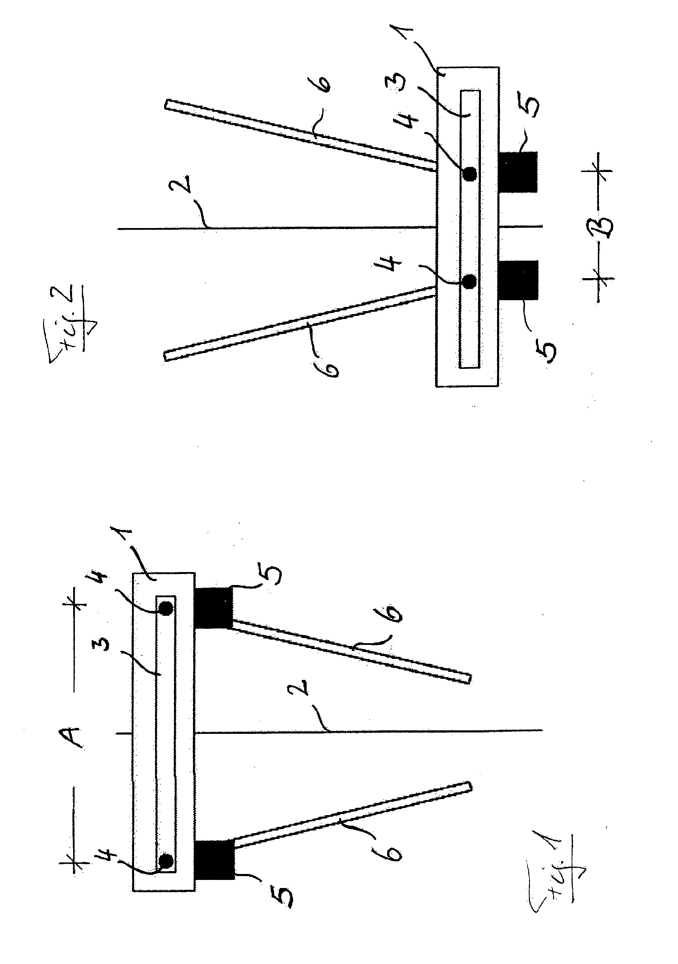

Figur 1 zeigt einen Ausschnitt aus einer Frontseite eines Kaffeevollautomaten, an der ein Getränkeauslaufkopf 1 entlang einer vertikalen Führungsschiene 2 als Verstelleinrichtung verschiebbar angeordnet ist. Der Getränkeauslaufkopf 1 trägt eine horizontale Schiene 3, in der zwei Kulissensteine 4 horizontal verschiebbar eingesetzt sind und die zusammen eine Betätigungseinrichtung darstellen. Die Kulissensteine 4 sind einstückig mit zwei Auslaufdüsen 5 für Kaffeegetränk gekoppelt, die am Getränkeauslaufkopf 1 nebeneinander und parallel abwärts gerichtet angebracht sind. Jeder der Kulissensteine 4 greift außerdem in eine vertikal abwärts und auf die Führungsschiene 2 hin geneigt zulaufende Kulisse 6 ein.

Die dargestellte Position des Getränkeauslaufkopfs 1 ist eine angehobene Position. Sie wird gewählt, um große Getränkegefäße, wie beispielsweise Becher oder Lattemacchiato-Gläser, mit einem Kaffeegetränk zu befüllen. In dieser Position hat der Getränkeauslaufkopf 1 den größtmöglichen Abstand von einer nicht darstellten Tassenaufstellfläche für das Getränkegefäß. In der dargestellten oberen Position haben die beiden Auslaufdüsen 5 einen maximalen Abstand A zueinander. Dadurch lassen sich große Getränkegefäße, die eventuell dickwandig oder bauchig sind und über große Einfüllöffnungen verfügen, unter dem Getränkeauslaufkopf 1 positionieren, ohne dass zumindest eine der Auslaufdüsen 5 neben bzw. zwischen die Getränkegefäße zielen würde.

Figur 2 zeigt eine abgesenkte Position des Getränkeauslaufkopfs 1, und zwar in seiner tiefsten Stellung. Sein Abstand gegenüber der nicht dargestellten Tassenaufstandsfläche ist jetzt am geringsten. In diese Position lässt sich der Getränkeauslaufkopf 1 manuell verschieben, wobei die Führungsschiene 2 seine ausschließlich vertikale Abwärtsbewegung sicherstellt. In dieser Position werden üblicherweise kleine Espressotassen gefüllt.

Während der Abwärtsbewegung des Getränkeauslaufkopfs 2 gleiten die Kulissensteine 4 beidseits zwangsgeführt in den Kulissen 6 ebenfalls abwärts. Entsprechend dem Verlauf der beiden Kulissen 6 in einer Abwärtsrichtung aufeinander zu werden auch die Kulissensteine 4 innerhalb der Schiene 3 aufeinander zu bewegt. Ihr Abstand verringert sich bei der Abwärtsbewegung des Getränkeauslaufkopfs 1 kontinuierlich. Da die Auslaufdüsen 5 mit den Kulissensteinen 4 starr gekoppelt sind, werden auch sie in dem Maße aufeinander zu bewegt, wie der Getränkeauslaufkopf 2 abwärts geschoben wird. An der dargestellten tiefsten Position des Getränkeauslaufkopfs 2 haben die Auslaufdüsen 5 ihren minimalen Abstand B erreicht. Jeder Position des Getränkeauslaufkopfs 1 zwischen seiner obersten Stellung gemäß Figur 1 und seiner untersten Stellung gemäß Figur 2 entspricht folglich ein einziger Abstand der Auslaufdüsen 5, der sich in einem Bereich zwischen dem maximalen Abstand A und dem minimalen Abstand B befindet. Diese unmittelbare und eineindeutige Zuordnung des Abstands der Auslaufdüsen 5 zu einer konkreten vertikalen Position des Getränkeauslaufs 1 ermöglicht es dem Benutzer, einen gewünschten oder erforderlichen Abstand zwischen den Auslaufdüsen 5 zielgenau einzustellen. Die sichtbaren Kulissen 6 verdeutlichen ihm zusätzlich den Zusammenhang zwischen der vertikalen Position des Getränkeauslaufkopfs 1 und dem Abstand der Auslaufdüsen 5 zueinander. Sie stellen eine mechanische Koppelung zwischen der Betätigungseinrichtung aus der Schiene 3 und den Kulissensteinen 4 der Auslaufdüsen 5 und der vertikalen Bewegung des Getränkeauslaufkopfs 1 her.

Da es sich bei dem vorhergehenden, detailliert beschriebenen Getränkeauslaufkopf um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der Kulissenführung in anderer Form als in der hier beschriebenen, zum Beispiel gebogen oder unsichtbar erfolgen. Ebenso kann die Koppelung zwischen der Betätigungseinrichtung der Auslaufdüsen und dem Verstellmechanismus des Getränkeauslaufkopfs in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichenliste

- 1: Getränkeauslaufkopf
- 2: Führungsschiene
- 3: horizontale Schiene
- 4: Kulissenstein
- 5: Auslaufdüse
- 6: Kulisse

- A: erster Abstand
- B: zweiter Abstand der Auslaufdüsen 5

## Patentansprüche

1. Getränkeauslaufkopf (1) für Heißgetränkemaschine für Haushaltszwecke, der zumindest zwischen einer abgesenkten Position und einer angehobenen Position vertikal verstellbar ist, mit zwei Auslaufdüsen (), die nebeneinander am Getränkeauslaufkopf (1) und zum Verändern ihres gegenseitigen Abstands mittels einer Betätigungseinrichtung horizontal bewegbar angeordnet sind, **gekennzeichnet durch** eine Kopplung der Betätigungseinrichtung (3, 4) der Auslaufdüsen (5) mit dem Getränkeauslaufkopf (1), so dass eine angehobenen Position des Getränkeauslaufkopfs (1) mit einem ersten Abstand (A) der Auslaufdüsen (5) und eine abgesenkte Position des Getränkeauslaufkopfs (1) mit einem zweiten Abstand (B) der Auslaufdüsen (5) korrespondiert, der vom ersten Abstand (A) verschieden ist.

2. Getränkeauslaufkopf (1) nach Anspruch 1 **dadurch gekennzeichnet, dass** der Getränkeauslaufkopf (1) zwischen der abgesenkten Position und der angehobenen Position und die Abstände (A; B) der Auslaufdüsen (5) stufenlos verstellbar sind.

3. Getränkeauslaufkopf (1) nach Anspruch 1 oder 2, **dadurch gekennzeichnet, dass** die abgesenkte Position mit einem geringen Abstand (B) der Auslaufdüsen (5) und die angehobene Position des Getränkeauslaufkopfs (1) mit einem größeren Abstand (A) der Auslaufdüsen (5) korrespondiert.

4. Getränkeauslaufkopf (1) nach einem der obigen Ansprüche, **gekennzeichnet durch** eine mechanische Koppelung (6) der vertikalen Stellung des Getränkeauslaufkopfs (1) mit dem Abstand (A; B) der Auslaufdüsen (5).

5. Getränkeauslaufkopf (1) nach einem der obigen Ansprüche, **dadurch gekennzeichnet, dass** die horizontale Bewegung der Auslaufdüsen (5) derart gekoppelt ist, dass sie bezüglich eine Mittelsenkrechten (2) symmetrisch in entgegen gesetzter Richtung um eine gleiche Weglänge bewegbar sind.

6. Getränkeauslaufkopf (1) nach einem der Ansprüche 1 oder 2, **dadurch gekennzeichnet, dass** nur eine Auslaufdüse bewegbar ist.

7. Getränkeauslaufkopf (1) nach einem der obigen Ansprüche, **dadurch gekennzeichnet, dass** die mindestens eine Auslaufdüse (5) verschiebbar ist.

8. Getränkeauslaufkopf (1) nach einem der obigen Ansprüche, **gekennzeichnet durch** eine Kulissenführung (6) als Kopplung.

9. Getränkeauslaufkopf (1) nach dem obigen Anspruch, **gekennzeichnet durch** eine horizontal verschiebbare Lagerung zumindest einer Auslaufdüse (5) am Getränkeauslaufkopf (1), **durch** eine Koppelung der Auslaufdüse (5) an einem Kulissenstein (4), der in eine vertikal geneigt verlaufenden Kulisse (6) verschiebbar eingreift.

## Claims

1. Beverage discharge head (1) for a hot beverage machine for domestic use that can be adjusted vertically at least between a lowered position and a raised position, having two outlet nozzles () that are arranged adjacent to each other at the beverage discharge head (1) and so as to be movable horizontally for the purpose of adjusting their interspace by means of a control device, **characterised by** a coupling of the control device (3, 4) of the outlet nozzles (5) to the beverage discharge head (1) so that a raised position of the beverage discharge head (1) corresponds to a first interspace (A) of the outlet nozzles (5) and a lowered position of the beverage discharge head (1) corresponds to a second interspace (B) of the outlet nozzles (5), which is different from the first interspace (A).

2. Beverage discharge head (1) according to claim 1, **characterised in that** the beverage discharge head (1) and the interspaces (A; B) of the outlet nozzles (5) are infinitely adjustable between the lowered position and the raised position.

3. Beverage discharge head (1) according to claim 1 or 2, **characterised in that** the lowered position corresponds to a small interspace (B) of the outlet nozzles (5) and the raised position of the beverage discharge head (1) corresponds to a greater interspace (A) of the outlet nozzles (5).

4. Beverage discharge head (1) according to one of the above claims, **characterised by** a mechanical coupling (6) of the vertical position of the beverage discharge head (1) to the interspace (A; B) of the outlet nozzles (5).

5. Beverage discharge head (1) according to one of the above claims, **characterised in that** the horizontal movement of the outlet nozzles (5) is coupled so as to be movable symmetrically in an opposite direction by an equal path length relative to a bisector (2).

6. Beverage discharge head (1) according to one of claims 1 or 2, **characterised in that** only one outlet nozzle is movable.

7. Beverage discharge head (1) according to one of the above claims, **characterised in that** the at least one outlet nozzle (5) can be displaced.

8. Beverage discharge head (1) according to one of the above claims, **characterised by** a sliding block guide (6) as coupling.

9. Beverage discharge head (1) according to the above claim, **characterised by** a horizontally displaceable positioning of at least one outlet nozzle (5) at the beverage discharge head (1), by a coupling of the outlet nozzle (5) to a sliding block (4) that engages displaceably with a vertically inclined connecting member (6).

## Revendications

1. Tête de sortie de boisson (1) pour une machine de préparation de boisson chaude à usage domestique, laquelle tête de sortie de boisson est réglable verticalement au moins entre une position abaissée et une position élevée, comprenant deux buses de sortie (5) qui sont disposées l'une à côté de l'autre sur la tête de sortie de boisson (1) et de manière déplaçable horizontalement au moyen d'un dispositif d'actionnement pour modifier leur écart mutuel, **caractérisée par** un couplage du dispositif d'actionnement (3, 4) des buses de sortie (5) à la tête de sortie de boisson (1) de manière à ce qu'une position élevée de la tête de sortie de boisson (1) corresponde à un premier écart (A) des buses de sortie (5) et qu'une position abaissée de la tête de sortie de boisson (1) corresponde à un deuxième écart (B) des buses de sortie (5), qui est différent du premier écart (A).

2. Tête de sortie de boisson (1) selon la revendication 1, **caractérisée en ce que** la tête de sortie de boisson (1) est réglable de manière progressive entre la position abaissée et la position élevée et **en ce que** les écarts (A ; B) des buses de sortie (5) sont réglables de manière progressive.

3. Tête de sortie de boisson (1) selon la revendication 1 ou 2, **caractérisée en ce que** la position abaissée avec un moindre écart (B) des buses de sortie (5) et la position élevée de la tête de sortie de boisson (1) avec un écart plus grand (A) des buses de sortie (5) correspondent.

4. Tête de sortie de boisson (1) selon l'une quelconque des revendications précédentes, **caractérisée par** un couplage mécanique (6) de la position verticale de la tête de sortie de boisson (1) avec l'écart (A ; B) des buses de sortie (5).

5. Tête de sortie de boisson (1) selon l'une quelconque des revendications précédentes, **caractérisée en ce que** le mouvement horizontal des buses de sortie (5) est couplé de manière à ce qu'elles soient déplaçables d'une même longueur de trajectoire symétriquement en direction opposée par rapport à une médiatrice (2).

6. Tête de sortie de boisson (1) selon l'une quelconque des revendications 1 ou 2, **caractérisée en ce que** seulement une buse de sortie est déplaçable.

7. Tête de sortie de boisson (1) selon l'une quelconque des revendications précédentes, **caractérisée en ce que** l'au moins une buse de sortie (5) est coulissante.

8. Tête de sortie de boisson (1) selon l'une quelconque des revendications précédentes, **caractérisée par** un guidage de coulisse (6) en tant qu'accouplement.

9. Tête de sortie de boisson (1) selon la revendication précédente, **caractérisée par** un palier horizontalement déplaçable au moins d'une buse de sortie (5) sur la tête de sortie de boisson (1), par un accouplement de la buse de sortie (5) à un coulisseau (4) qui a prise de manière coulissante dans une coulisse (6) s'étendant verticalement de manière inclinée.
